**Europäisches Patentamt**

**European Patent Office**

**Office européen des brevets**

(19)

(11) Veröffentlichungsnummer : **0 407 716 B1**

# (12) EUROPÄISCHE PATENTSCHRIFT

(45) Veröffentlichungstag der Patentschrift :
**08.07.92 Patentblatt 92/28**

(21) Anmeldenummer : **90109931.7**

(22) Anmeldetag : **25.05.90**

(51) Int. Cl.⁵ : **B62D 6/00,** B62D 101/00,
B62D 111/00, B62D 105/00,
B62D 131/00, B62D 117/00,
B62D 119/00

(54) **Verfahren zur Einstellung einer unterstützenden Kraft in einer Servolenkung in Abhängigkeit von mehrerenFahrbedingungsparametern.**

(30) Priorität : **08.07.89 DE 3922527**

(43) Veröffentlichungstag der Anmeldung :
**16.01.91 Patentblatt 91/03**

(45) Bekanntmachung des Hinweises auf die
Patenterteilung :
**08.07.92 Patentblatt 92/28**

(84) Benannte Vertragsstaaten :
**ES FR GB IT SE**

(56) Entgegenhaltungen :
**EP-A- 0 109 085
EP-A- 0 296 756
GB-A- 2 119 326
GB-A- 2 205 541
GB-A- 2 206 321
PATENT ABSTRACTS OF JAPAN vol. 9, no.
117 (M-381)(1840), 22. Mai 1985; & JP-
A-60004466 (NISSAN) 10.01.1985**

(73) Patentinhaber : **DAIMLER-BENZ
AKTIENGESELLSCHAFT
Mercedesstrasse 136
W-7000 Stuttgart 60 (DE)**

(72) Erfinder : **Kilian, Ulrich
Sonnenhalde 25
W-7337 Albershausen (DE)**
Erfinder : **Götz, Jürgen
Habichtweg 6
W-7073 Lorch (DE)**
Erfinder : **Hainbuch, Claus-Michael
Nelkenstrasse 19
W-7056 Weinstadt (DE)**
Erfinder : **Edenhofer, Berthold
Kirchäckerstrasse 52
W-7333 Ebersbach/Fils (DE)**

EP 0 407 716 B1

**Beschreibung**

Die Erfindung betrifft ein Verfahren zur Einstellung einer unterstützenden Kraft in einer Servolenkung in Abhängigkeit von mehreren Fahrbedingungsparametern gemäß dem Oberbegriff des Patentanspruches 1.

Bei einem gattungsgemäßen Verfahren (JP-OS 51-149632) wird das vom Fahrzeugführer bei einem Lenkvorgang aufzubringende Handmoment vergrößert mit zunehmender Querbeschleunigung und mit zunehmender Fahrzeuggeschwindigkeit, wobei der Einfluß der beiden Größen Querbeschleunigung und Fahrzeuggeschwindigkeit auf die Veränderung des aufzubringenden Handmomentes entkoppelt ist, d.h., daß das Ausmaß der Zunahme des aufzubringenden Handmomentes mit zunehmender Fahrzeuggeschwindigkeit unabhängig von der Größe der Querbeschleunigung ist und daß das Ausmaß der Zunahme des aufzubringenden Handmomentes mit zunehmender Querbeschleunigung unabhängig von der Größe der Fahrzeuggeschwindigkeit ist.

Als nachteilig könnte bei diesem Verfahren unter Umständen erachtet werden, daß aus der Zunahme des aufzubringenden Handmomentes mit zunehmender Fahrzeuggeschwindigkeit dem Fahrzeugführer keine unmittelbare Information zur Verfügung steht, ob sich das Fahrzeug in bzw. nahe an einem kritischen Zustand befindet. Ebensolches gilt auch für die Zunahme des aufzubringenden Handmomentes mit zunehmender Querbeschleunigung.

Es ist außerdem ein Verfahren bekannt (DE 28 34 283 Al), wonach die unterstützende Kraft in der Servolenkung in Abhängigkeit von der Querbeschleunigung variiert wird derart, daß keine unterstützende Kraft in der Servolenkung auftritt, wenn die Querbeschleunigung einen bestimmten Grenzwert überschreitet. Das Abschalten dieser unterstützenden Kraft geschieht dabei abrupt bei Erreichen des Grenzwertes.

Nachteilig wirkt sich bei diesem Verfahren aus, daß der Fahrzeugführer durch die plötzliche Änderung der an dem Lenkrad spürbaren Kraft zu Panikreaktionen veranlaßt werden kann. Außerdem fällt mit zunehmender Querbeschleunigung die bei einem Fahrzeug ohne Servolenkung an dem Lenkrad spürbare Kraft bei Erreichen des querdynamischen Grenzbereiches deutlich ab. Wenn nun bei diesem Verfahren eine große unterstützende Kraft in der Servolenkung besteht bevor das Fahrzeug den Schwellwert der Querbeschleunigung erreicht, wird der eben für ein Fahrzeug ohne Servolenkung beschriebene Effekt umgekehrt. Wirkt dann die volle Kraft der Lenkung auf das Lenkrad zurück, weil die unterstützende Kraft weggenommen wurde, wird für den Fahrzeugführer in Abhängigkeit der Größe der vorher unterstützenden Kraft eine größere Kraft spürbar. Im ersten Moment wird der Fahrzeugführer von der größeren Kraft überrascht und bis zu einer ausgleichenden Reaktion des Fahrzeugführers wird die Lenkung des Fahrzeugs zurück gestellt, d.h. der Lenkwinkel wird verkleinert und das Fahrzeug wird ungewollt in eine Richtung aus der Kurve hinaus gelenkt. Das begünstigt eine ohnehin auftretende Instabilität des Fahrverhaltens eines Fahrzeuges beim Erreichen des querdynamischen Grenzbereiches, bei dem das Fahrzeug aus der Kurve hinaus "über die Räder schiebt".

Des weiteren ist es aus der DE 34 24 826 A1 und der DE 35 04 561 A1 bekannt, unter Verwendung geeigneter Größen durch eine Mittelwertbildung auf einen allgemeinen Fahrzustand zu schließen. Insbesondere soll nach diesen Schriften unterschieden werden zwischen einer Fahrt in der Stadt, einer Fahrt auf der Autobahn, einer Fahrt auf der Landstraße und einer Fahrt auf einer Straße im Gebirge, insbesondere einer Fahrt auf einer Serpentinen - Strecke. Als charakteristische Größen werden die Fahrzeuggeschwindigkeit und der Lenkwinkel verwendet. Weiterhin wird ein Lastsensor verwendet. Aus diesen Großen wird durch eine Mittelwertbildung der allgemeine Fahrzustand bestimmt. Zu diesem Fahrzustand wird eine entsprechende unterstutzende Kraft in der Servolenkung eingestellt.

Bei dem Verfahren nach den beiden letztgenannten Schriften ergeben sich Nachteile dahin gehend, daß eine Anpassung der unterstützenden Kraft in der Servolenkung an die momentan vorliegenden Fahrbedingungen u.U. zu spät erfolgen kann. Außerdem ist die Unterteilung bzgl. der Fahrbedingungen nur sehr grob, da die momentane Fahrsituation derjenigen Fahrbedingung angepaßt wird, deren Parameter sie am nächsten liegt.

Es ist außerdem bei Servolenkungen generell bekannt, die unterstützende Kraft in einer Servolenkung mit zunehmender Fahrzeuggeschwindigkeit zu verringern, so daß der Fahrzeugführer im Bereich kleiner Fahrzeuggeschwindigkeiten eine große Unterstützung erhalt (Rangieren) und mit größer werdender Fahrzeuggeschwindigkeit einen direkteren Kontakt zur Fahrbahn hat.

Aufgabe der Erfindung ist es, eine Variation einer unterstützenden Kraft in der Lenkung so durchzuführen,
– daß die von dem Fahrzeugführer beim Lenken aufzubringende Kraft einen solchen Betrag annimmt, daß ein kritischer Fahrzustand eingeschätzt werden kann und
– daß dem Fahrzeugführer unter den momentanen Fahrbedingungen sofort eine geeignete unterstützende Kraft in der Lenkung zur Verfügung gestellt wird.

Diese Aufgabe wird bei einem gattungsgemäßen Verfahren zur Einstellung einer unterstutzenden Kraft in einer Servolenkung in Abhängigkeit mehrerer momentaner Fahrbedingungsparameter erfindungsgemäß mit

2

den kennzeichnenden Merkmalen des Anspruchs 1 gelöst, wobei die Merkmale der Unteransprüche vorteilhafte Aus- und Weiterbildungen kennzeichnen.

Vorteile der Erfindung gegenüber dem bekannten Stand der Technik bestehen darin, daß der Fahrzeugführer ein besseres Gefühl für die Fahrsituation bekommt. Außerdem ist ein genaueres Einstellen der unterstützenden Kraft in der Servolenkung in Abhängigkeit der Fahrbedingungen möglich, da keine Zuordnung zu wenigen diskreten Fahrbedingungen durchgeführt wird, sondern eine Diskretisierung in Form von Unterteilungen bzgl. mindestens einer, die Fahrbedingungen charakterisierenden Größe erfolgt, die ggf. durch eine Interpolation zwischen diesen diskreten Werten ergänzt wird.

Die Fahrbedingungen werden hauptsächlich charakterisiert durch die Parameter "Fahrzeuggeschwindigkeit" $v_F$ und "Querbeschleunigung" $a_y$. Bei dem erfindungsgemäßen Verfahren erfolgt eine gleichzeitige Berücksichtigung der beiden Parameter, indem in einem Kennfeld das Verhältnis von Handmoment $T_H$ und Lenkstockhebelmoment $T_L$ über diesen beiden Parametern aufgetragen wird. Mit diesem Sollwert wird dann die unterstützende Kraft in der Servolenkung eingestellt, die in Abhängigkeit der Fahrbedingungen eine Modulation des Handmomentes $T_H$ bewirkt. Das Verhältnis von Handmoment $T_H$ und Lenkstockhebelmoment $T_L$ wird dabei so gewählt, daß sich in Abhängigkeit der Fahrbedingungen ein für den Fahrzeugführer zweckmäßiges Handmoment $T_H$ einstellt.

Im Rangierbereich soll dem Fahrzeugfuhrer eine große unterstützende Kraft in der Servolenkung zur Verfügung gestellt werden. Der Rangierbereich wird dadurch erkannt, daß sowohl eine niedrige Fahrzeuggeschwindigkeit $v_F$ als auch eine niedrige Querbeschleunigung $a_y$ auftreten. Sind die Fahrzeuggeschwindigkeit $v_F$ und die Querbeschleunigung $a_y$ gleich 0, wird dem Fahrzeugführer eine große unterstützende Kraft in der Servolenkung zur Verfügung gestellt, die dann beim Anrollen des Fahrzeuges (Fahrzeuggeschwindigkeit $v_F$ ungleich 0) verringert wird. Der Sollwert für das Handmoment $T_H$ steigt dann degressiv an sowohl mit der Fahrzeuggeschwindigkeit $v_F$ als auch mit der Querbeschleunigung $a_y$. Die Unterteilung bzgl. der Fahrzeuggeschwindigkeit $v_F$ geschieht bei Berucksichtigung eines Intervalles von $0$-$v_{F\ max}$ (maximale Fahrzeuggeschwindigkeit) in vorteilhafter Weise durch eine variable Gestaltung der Schrittweite, indem im Bereich kleiner Fahrzeuggeschwindigkeiten $v_F$ die Schrittweite bei 2 km/h liegt und mit zunehmender Fahrzeuggeschwindigkeit $v_F$ auf 20 km/h ansteigt. Eine zweckmäßige Unterteilung bzgl. der Querbeschleunigung $a_y$ ergibt sich bei Berücksichtigung eines Intervalles von $0$-$8$ m/s², indem die Schrittweite im Bereich kleiner Querbeschleunigungen $a_y$ ca. $0{,}25$ m/s² beträgt und mit zunehmender Querbeschleunigung $a_y$ auf ca. $1$-$1{,}5$ m/s² ansteigt. Es ergeben sich somit ca. 20-30 Geschwindigkeitsklassen und ca. 10 Querbeschleunigungsklassen. Es ist grundsätzlich auch denkbar, andere Schrittweiten oder andere Klassen für die Fahrzeuggeschwindigkeit $v_F$ und/oder die Querbeschleunigung $a_y$ zu verwenden.

Vor dem Erreichen des querdynamischen Grenzbereiches hat dabei der Sollwert für das Handmoment $T_H$ eine solche Größenordnung, daß das Abfallen der rückwirkenden Kraft als Anzeichen für das Erreichen des querdynamischen Grenzbereiches deutlich zu erkennen ist.

Um insbesondere im Bereich kleiner Fahrzeuggeschwindigkeiten $v_F$ und kleiner Querbeschleunigungen $a_y$ wegen der Größenordnung der unterstutzenden Kraft bei diesem Verfahren zur Einstellung einer unterstützenden Kraft in der Servolenkung das Gefühl für eine möglicherweise auftretende Fahrbahnglätte beizubehalten, wird das erfindungsgemäße Verfahren vorteilhafterweise so ausgeführt, daß beim Erkennen einer Fahrbahnglätte die unterstutzende Kraft in der Servolenkung verringert wird auf einen Betrag, der dem Betrag bei einer größeren Fahrzeuggeschwindigkeit $v_F$ bzw. einer größeren Querbeschleunigung $a_y$ entspricht. Die Verringerung der unterstützenden Kraft in der Servolenkung bewirkt dabei, daß der Fahrzeugführer das Abfallen der Kraft bei Erreichen des querdynamischen Grenzbereiches erkennen kann. Bei zunehmender Fahrbahnglätte wird der querdynamische Grenzbereich bei kleiner werdenden Querbeschleunigungen $a_y$ erreicht. Somit kann die Berücksichtigung unterschiedlicher Fahrbahnzustände bei der Bestimmung der unterstützenden Kraft in der Servolenkung erfolgen, indem in Abhängigkeit der Differenz der Querbeschleunigungen $a_y$ die unterstützende Kraft in der Servolenkung verringert wird, die sich einerseits durch die Querbeschleunigung $a_y$ bei Erreichen des querdynamischen Grenzbereiches unter normalen Fahrbahnbedingungen ergibt, andererseits durch die Querbeschleunigung $a_y$ bei Erreichen des querdynamischen Grenzbereiches unter den momentan ermittelten Fahrbahnbedingungen. Eine auftretende Fahrbahnglätte kann auch erkannt werden durch eine Abweichung der Kraft im Lenkgestänge bei einer Kurvenfahrt von einem Referenzwert der Kraft im Lenkgestänge bei optimalen Fahrbahnbedingungen oder aus dem Auftreten von Signalen bzw. deren Wirkungen einer Antriebsschlupfregelung (ASR) oder aus dem Auftreten von Signalen bzw. deren Wirkungen eines AntiBlockierSystems (ABS). Die Wirkungen der eben aufgezählten Signale können dabei die sich an den einzelnen Rädern einstellenden Bremsdrücke oder die Kräfte an den Bremssätteln bzw. Bremstrommeln sein, die in an sich bekannter Weise bestimmt werden. Außerdem ist eine mögliche Wirkung der Signale einer ASR eine Reduzierung des Motormomentes, die vorzugsweise erzeugt wird, indem in die Stellung der Drosselklappe oder der Regelstange eingegriffen wird. Grundsätzlich kann das Maß der notwendigen Reduzierung der unterstützenden Kraft in der Servolenkung aus jeder dieser aufgezählten Möglichkeiten zur Bestimmung der Fahrbahnglätte abgeleitet werden.

In vorteilhafter Weise werden Unterschiede im Lenkverhalten des Fahrzeuges, die sich aus unterschiedlichen Beladungszuständen des Fahrzeuges ergeben, durch eine geeignete Variation der unterstützenden Kraft in der Servolenkung in Abhängigkeit von dem Beladungszustand ausgeglichen. Grundsätzlich ist es möglich, das Kennfeld der unterstützenden Kraft in der Servolenkung zu variieren durch eine Diskretisierung bzgl. des Beladungszustandes des Fahrzeuges. Eine Anhäufung einer großen Datenmenge wegen der Diskretisierung bzgl. des Beladungszustandes kann jedoch vermieden werden, indem zwei Kennfelder der unterstützenden Kraft in der Servolenkung aufgenommen werden, entsprechend den Beladungszuständen "leer" und "voll".

Es werden dann die beiden Werte der unterstützenden Kraft in der Servolenkung zu den momentanen Fahrbedingungen (Fahrzeuggeschwindigkeit $v_F$ und Querbeschleunigung $a_y$) ausgelesen. Wenn der aktuelle Beladungszustand bekannt ist, kann durch eine Interpolation zwischen diesen beiden Werten der unterstützenden Kraft in der Servolenkung eine unterstützende Kraft so angesteuert werden, daß sich an dem Fahrzeug ein Lenkverhalten einstellt, das unabhängig von dem aktuellen Beladungszustand ist. Diese Interpolation zwischen den beiden extremen Beladungszuständen kann als lineare Interpolation durchgeführt werden. Es ist auch möglich, in Vorversuchen experimentell die Abhängigkeit des Lenkverhaltens vom Beladungszustand in genauerer Weise z.B. durch die oben beschriebene Diskretisierung zu bestimmen, um dann, zu einem verbesserten Ausgleich bzgl. der Beladungszustände zu gelangen, indem ein komplizierterer Verlauf der unterstützenden Kraft in der Servolenkung durch eine geeignete Funktion angenähert wird. Die Parameter dieser Funktion werden in an sich bekannter Weise bestimmt, z.B. durch die Methode der Parameteridentifikation. Der aktuelle Beladungszustand kann dabei durch Messung der Gewichtskraft $F_{VA}$ auf die gelenkte Achse ermittelt werden, die z.B. durch Dehnungsmeßstreifen oder bei luftgefederten Fahrzeugen durch Messung des Luftfederdruckes bestimmt wird. Bei dieser Methode wird bei der Durchführung des erfindungsgemäßen Verfahrens die Beladung berücksichtigt, die Einfluß auf das Lenkverhalten des Fahrzeuges nimmt. Beispielsweise wird dabei auch eine Veränderung des Lenkverhaltens bei einer Fahrt bergab (größere Gewichtskraft auf der gelenkten Achse) und bei einer Fahrt bergauf (geringere Gewichtskraft auf der gelenkten Achse) berücksichtigt.

Des weiteren ist es grundsätzlich möglich, die Schwerpunkthöhe bei der Bestimmung der notwendigen unterstützenden Kraft in der Servolenkung zu berücksichtigen. Eine zunehmende Schwerpunkthöhe bewirkt beim Durchfahren einer Kurve eine Gewichtsverlagerung auf die Kurvenaußenseite. Dadurch wird ein größerer Schräglaufwinkel erforderlich, d.h. daß die an das Lenkrad zurück wirkende Kraft bei niedrigeren Querbeschleunigungen $a_y$ ihren Maximalwert annimmt. Es besteht die Möglichkeit, die Schwerpunkthöhe während des Fahrens zu messen und aus dieser gemessenen Größe eine Veränderung der unterstützenden Kraft in der Servolenkung abzuleiten derart, daß der Abfall der an das Lenkrad rückwirkenden Kraft bei Erreichen des querdynamischen Grenzbereiches für den Fahrzeugführer erkennbar ist, d.h. daß die unterstützende Kraft in der Servolenkung mit zunehmender Schwerpunkthöhe verkleinert wird. Es besteht auch die Möglichkeit, auf die Bestimmung der Schwerpunkthöhe während des Fahrens zu verzichten, wenn die unterstützende Kraft in der Servolenkung grundsätzlich einen solchen Betrag nicht überschreitet, daß bei allen relevanten Beladungszuständen der Abfall der rückwirkenden Kraft am Lenkrad bei Erreichen des querdynamischen Grenzbereiches unter allen Fahrbahnzuständen für den Fahrzeugführer erkennbar ist.

Wenn bei dem Fahrzeug der Lenkradwinkel erfaßt wird, kann daraus durch Differenzieren die Lenkradwinkelgeschwindigkeit gewonnen werden. Aus einer großen Lenkradwinkelgeschwindigkeit kann dann auf eine Situation geschlossen werden, die z.B. in einer Gefahrensituation eine zunehmende unterstutzende Kraft in der Servolenkung erfordert. Diese Zunahme der unterstützenden Kraft in der Servolenkung kann dabei linear mit der Lenkradwinkelgeschwindigkeit ansteigen, in einer anderen Ausführungsform kann die Zunahme der unterstützenden Kraft in der Servolenkung progressiv mit der Lenkradwinkelgeschwindigkeit zunehmen.

Grundsätzlich ist es möglich, eine Funktionsüberprüfung einer Servolenkung durchzuführen, indem das vom Fahrzeugführer am Lenkrad aufzubringende Handmoment $T_H$ gemessen (beispielsweise durch das Torsionsmoment im Lenkrohr) und mit dem den Fahrbedingungen entsprechenden Sollwert für das Handmoment $T_H$ verglichen wird. Bei einem Defekt in der Servolenkung tritt eine Abweichung zwischen dem gemessenen Handmoment $T_H$ und dem Sollwert auf.

Ein Ausführungsbeispiel der Erfindung ist in der Zeichnung schematisch dargestellt und wird im folgenden näher beschrieben. Es zeigen:

Fig. 1: einen möglichen Sollverlauf für das Handmoment $T_H$ in Abhängigkeit von Parametern, die die Fahrbedingungen charakterisieren,

Fig. 2: ein Funktionsblockschaltbild zur Durchführung des Verfahrens und

Fig. 3: einen Verfahrensablauf zur Bestimmung der unterstützenden Kraft in der Servolenkung.

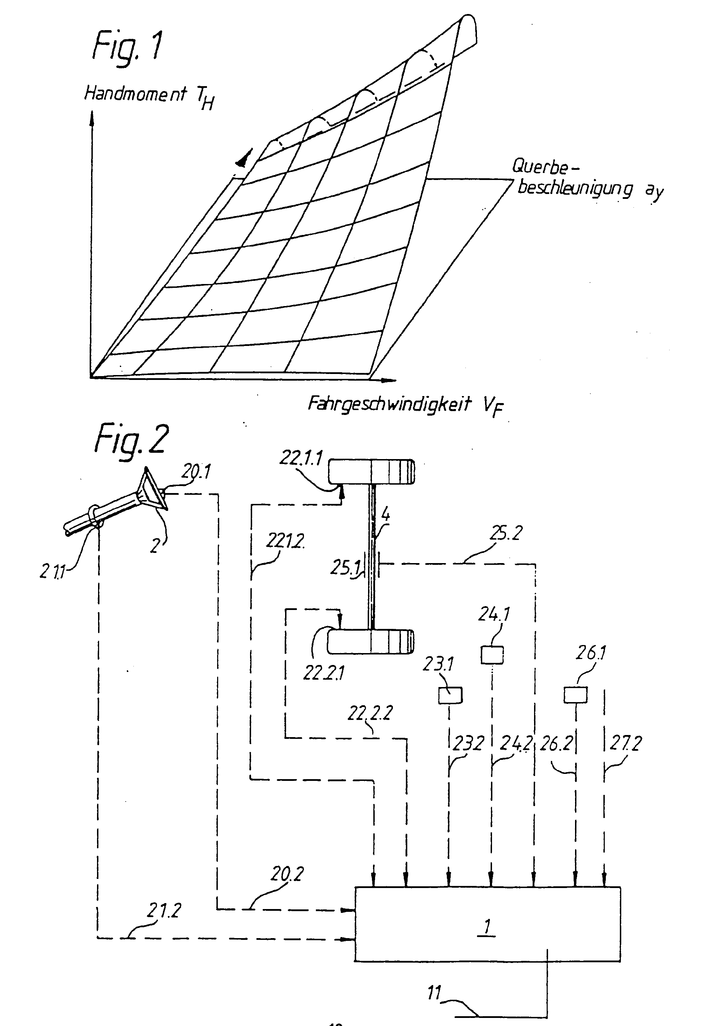

Wie aus Fig. 1 ersichtlich, soll der Fahrzeugführer im Rangierbereich nur ein geringes Handmoment $T_H$ aufbringen, um einen Lenkeinschlag zu bewirken. Mit zunehmender Fahrzeuggeschwindigkeit $v_F$ und mit zunehmender Querbeschleunigung $a_y$ wird das von dem Fahrzeugführer aufzubringende Handmoment $T_H$ größer, so daß ein Gefühl für die Fahrbahnoberfläche in Abhängigkeit von den Fahrbedingungen gegeben ist. Das Handmoment $T_H$ hat dabei einen solchen Verlauf, daß eine Rückkopplung des Abfallens des Handmomentes $T_H$ bei Erreichen des querdynamischen Grenzbereiches gewährleistet ist. Das Erreichen des querdynamischen Grenzbereiches in Abhängigkeit der Betriebsbedingungen des Fahrzeuges wird dabei im wesentlichen beeinflußt von der Beschaffenheit der Fahrbahnoberfläche, der Schwerpunkthöhe, der Fahrzeuggeschwindigkeit $v_F$, der Querbeschleunigung $a_y$ und der Gesamtbeladung des Fahrzeuges. Der Sollverlauf des Handmomentes $T_H$ wird zweckmäßigerweise so gewählt, daß das Erkennen des querdynamischen Grenzbereiches bei veränderlicher Schwerpunkthöhe generell gewährleistet ist. Die anderen aufgezählten Größen haben einen größeren Einfluß auf das Erkennen des querdynamischen Grenzbereiches. Deshalb werden diese Größen vorteilhafterweise gesondert erfaßt und bei der Bestimmung der unterstützenden Kraft in der Servolenkung berücksichtigt. Entsprechend diesem Sollverlauf für das Handmoment $T_H$ wird das Verhältnis von Handmoment $T_H$ und Lenkstockhebelmoment $T_L$ festgelegt.

In Fig. 2 ist ein Funktionsblockschaltbild zur Durchführung des erfindungsgemäßen Verfahrens dargestellt. In dem Steuergerät 1 wird aufgrund der gemessenen Größen ein Ausgangssignal 11 generiert, das eine Änderung der unterstutzenden Kraft in der Servolenkung bewirkt. An dem Lenkrad 2 können Sensoren 20.1 und 21.1 angebracht sein, die den Lenkradwinkel sowie das Handmoment $T_H$ erfassen. Diese Meßgrößen werden dem Steuergerät 1 über die Signalleitungen 20.2 und 21.2 zugeführt. Wenn in dem Steuergerät 1 das Signal 21.2 des Handmomentes $T_H$ verarbeitet wird, kann eine Funktionsüberprüfung der Servolenkung realisiert werden, indem in dem Steuergerät 1 das gemessene Handmoment $T_H$ (Signal 21.2) mit dem Handmoment verglichen wird, das sich aufgrund des ausgegebenen Signales 11 in Abhängigkeit der sonstigen Eingangsgrößen einstellen sollte. Wenn in dem Steuergerät 1 das Signal 20.2 des Lenkradwinkels verarbeitet wird, kann eine Situation erkannt werden, in der eine zunehmende unterstützende Kraft in der Servolenkung benötigt wird. Dabei wird in dem Steuergerät 1 der Lenkradwinkel nach der Zeit differenziert. Aus einer großen Lenkradwinkelgeschwindigkeit wird dann ein Bedarf einer zunehmenden unterstützenden Kraft in der Servolenkung ermittelt. Diese Situation kann beispielsweise auftreten, wenn der Fahrzeugführer infolge einer Schleuderbewegung des Fahrzeuges stark gegenlenken muß. Bei der Durchführung des erfindungsgemäßen Verfahrens muß die Fahrzeuggeschwindigkeit $v_F$ berücksichtigt werden, die beispielsweise gewonnen werden kann, indem die Signale von Raddrehzahlsensoren 22.1.1 und 22.2.1 über Signalleitungen 22.1.2 und 22.2.2 dem Steuergerät 1 zugeführt werden. Aus den Raddrehzahlsignalen 22.1.2 und 22.2.2 kann außerdem die Querbeschleunigung $a_y$ des Fahrzeuges abgeleitet werden. Die Fahrzeuggeschwindigkeit $v_F$ kann alternativ durch einen an sich bekannten Sensor 23.1 gemessen werden, dessen Signal über die Leitung 23.2 dem Steuergerät 1 zugeführt wird. Ebenso kann die Querbeschleunigung $a_y$ über einen eigenen Sensor 24.1 erfaßt werden, dessen Signal dann über die Leitung 24.2 dem Steuergerät 1 zugeführt wird. Zur Berücksichtigung des Beladungszustandes wird die Last durch einen Lastsensor 25.1 gemessen, dessen Signal dem Steuergerät 1 über die Leitung 25.2 zugeführt wird. Dieser Lastsensor 25.1 wird vorzugsweise an der gelenkten Achse angebracht. Eine Realisierungsmöglichkeit dieses Lastsensors 25.1 ist durch die Verwendung von Dehnungsmeßstreifen gegeben. Bei einem Druckluft-gefederten Fahrzeug kann die Last auch durch die Messung des Druckes im Federungssystem ermittelt werden. Es können auch die Signale an die den Druck steuernden Bauteile des Federungssystems verwendet werden. Außerdem kann dem Steuergerät ein Signal 26.2 zugeführt werden, das die Berücksichtigung der von einem Sensor 26.1 gemessenen Schwerpunkthöhe bei der Durchführung des erfindungsgemäßen Verfahrens gestattet. Die Berücksichtigung der Schwerpunkthöhe erfolgt dabei allerdings zweckmäßigerweise bei der Erstellung des Kennfeldes, so daß eine Sensierung der Schwerpunkthöhe während des Fahrens nicht notwendig ist. Außerdem kann der Zustand der Fahrbahnoberfläche (Glätte) berücksichtigt werden, wenn dem Steuergerät 1 das Signal 27.2 zugeführt wird. Eine Glätte kann dabei erkannt werden, indem eine Abweichung einer Kraft im Lenkgestänge von einer Referenzkraft unter denselben Fahrbedingungen bei optimaler Fahrbahnoberfläche festgestellt wird. Alternativ kann eine Fahrbahnglätte erkannt werden, wenn ein AntiBlockierSystem oder eine Antriebsschlupfregelung Ausgangssignale abgeben.

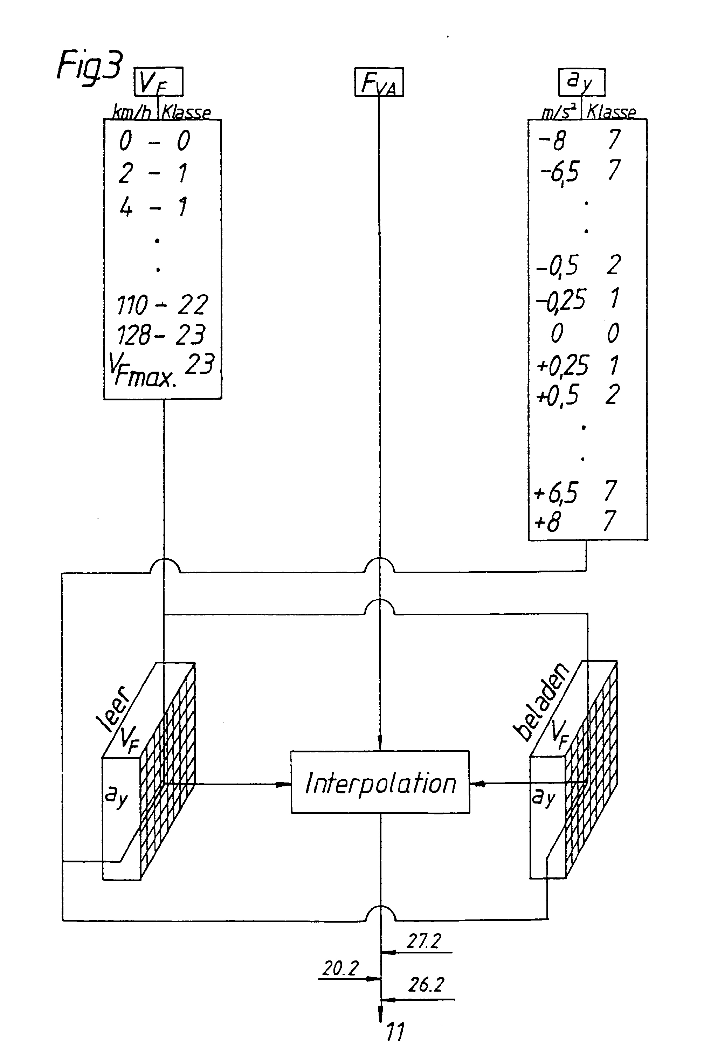

Aus der Fig. 3 ist der Verfahrensablauf zur Bestimmung der unterstützenden Kraft in der Servolenkung zu entnehmen. Die Fahrzeuggeschwindigkeit $v_F$ sowie die Querbeschleunigung $a_y$ werden jeweils in bestimmte Klassen eingeteilt. Zu diesen Klassen wird aus zwei Kennlinienfeldern entsprechend den Beladungszustanden "leer" und "beladen" jeweils ein Wert ausgelesen, welche die unterstützende Kraft in der Servolenkung in Abhängigkeit der beiden Beladungszustände repräsentieren. Entsprechend dem aktuellen Beladungszustand wird zwischen diesen beiden Werten eine Interpolation durchgeführt. Somit ergibt sich dann ein Ausgangssignal 11, das dem aktuellen Beladungszustand entspricht. Dieses Ausgangssignal 11 kann so beeinflußt werden, daß bei zunehmender Straßenglätte (Signal 27.2) und zunehmender Schwerpunkthöhe (Signal 26.2) eine Verringerung der unterstutzenden Kraft in der Servolenkung angesteuert wird in Abhängigkeit von der Fahrzeuggeschwindigkeit $v_F$ und der Querbeschleunigung $a_y$, so daß das Erreichen des querdynamischen Grenzbereiches für den Fahrzeugführer spürbar bleibt. In vorteilhafter Weise wird die Lenkradwinkelgeschwindigkeit (Ableitung aus Signal 20.2) berücksichtigt, indem mit zunehmender Lenkradwinkelgeschwindigkeit eine größere unterstützende Kraft in der Servolenkung angesteuert wird.

Nachfolgend wird ein Ausführungsbeispiel des Verfahrens zur Einstellung einer unterstützenden Kraft in einer Servolenkung in Abhängigkeit von mehreren Fahrbedingungsparametern angegeben. Der gemessenen Fahrzeuggeschwindigkeit $v_F$ und der gemessenen Querbeschleunigung $a_y$ werden zunächst die entsprechenden Klassen zugeordnet. Entsprechend diesen Klassen werden aus den beiden Kennlinienfeldern entsprechend den Beladungszuständen "leer" und "voll" die Ausgangssignale ausgelesen. Zwischen diesen beiden Werten wird dann eine lineare Interpolation entsprechend dem aktuell gemessenen Beladungszustand durchgeführt. Wenn - beispielsweise aus einer Differenz einer im Lenkgestänge gemessenen Kraft zu einer Referenzkraft bei optimalen Fahrbahnverhältnissen unter denselben Fahrbedingungenfestgestellt wird, daß eine Straßenglätte vorliegt, wird das Ausgangssignal so verändert, daß sich eine geringere unterstützende Kraft in der Servolenkung einstellt. In dem geschilderten Beispiel kann die Verringerung der unterstützenden Kraft in der Servolenkung proportional zur Differenz der im Lenkgestänge gemessenen Kraft zur Referenzkraft erfolgen. Eine Berücksichtigung der Schwerpunkthöhe ist möglich, indem die unterstützende Kraft in der Servolenkung mit zunehmender Schwerpunkthöhe verringert wird. Diese Verringerung kann proportional zur Schwerpunkthöhe erfolgen. Zweckmäßig ist weiterhin eine Zunahme der unterstützenden Kraft mit der Lenkradwinkelgeschwindigkeit. Diese Zunahme kann proportional zur Lenkradwinkelgeschwindigkeit erfolgen.

**Patentansprüche**

1. Verfahren zur Einstellung einer unterstützenden Kraft in einer Servolenkung in Abhängigkeit von mehreren Fahrbedingungsparametern,

– wobei aus den Fahrbedingungsparametern ein Sollwert für ein von dem Fahrzeugführer am Lenkrad aufzubringendes Handmoment abgeleitet wird,

– wobei dieser Sollwert angesteuert wird, indem die unterstützende Kraft in der Servolenkung so eingestellt wird, daß bei der Betrachtung einer Bilanz das Handmoment und die unterstützende Kraft sich aufgrund der Fahrbedingungen mit den sich einstellenden Kräfte in der Lenkung gerade kompensieren,

– wobei einer der Fahrbedingungsparameter die Querbeschleunigung $a_y$ ist,

– wobei ein weiterer Fahrbedingungsparameter die Fahrzeuggeschwindigkeit $v_F$ ist und

– wobei sowohl eine zunehmende Querbeschleunigung $a_y$ als auch eine zunehmende Fahrzeuggeschwindigkeit $v_F$ zu einer zumindest annähernd kontinuierlichen Reduzierung der unterstützenden Kraft in der Servolenkung führt,

**dadurch gekennzeichnet,**

daß bei einer Querbeschleunigung $a_{y2}$ eine stärkere Reduzierung der unterstützenden Kraft in der Servolenkung mit zunehmender Fahrzeuggeschwindigkeit $v_F$ erfolgt als bei einer Querbeschleunigung $a_{y1} < a_{y2}$.

2. Verfahren nach Anspruch 1,

**dadurch gekennzeichnet,**

daß bei einer Fahrzeuggeschwinigkeit $v_{F2}$ eine stärkere Reduzierung der unterstützenden Kraft in der Servolenkung mit zunehmender Querbeschleunigung $a_y$ erfolgt als bei einer Fahrzeuggeschwindigkeit $v_{F1} < v_{F2}$.

3. Verfahren nach einem der Ansprüche 1 oder 2,

**dadurch gekennzeichnet,**

daß die Reduzierung der unterstützenden Kraft in der Servolenkung bezogen auf eine Änderung der Fahrzeuggeschwindigkeit $v_F$ im Bereich kleiner Fahrzeuggeschwindigkeiten $v_F$ einen größeren Betrag annimmt als bei höheren Fahrzeuggeschwindigkeiten $v_F$.

4. Verfahren nach einem der Ansprüche 1 bis 3,

**dadurch gekennzeichnet,**

daß die Reduzierung der unterstützenden Kraft in der Servolenkung bezogen auf eine Änderung der Querbeschleunigung $a_y$ im Bereich kleiner Querbeschleunigungen $a_y$ einen größeren Betrag annimmt als bei höheren Querbeschleunigungen $a_y$.

5. Verfahren nach einem der Ansprüche 1 bis 4,

**dadurch gekennzeichnet,**

daß die unterstützende Kraft in der Servolenkung bei Annäherung der Fahrbedingungen an den querdynamischen Grenzbereich derart reduziert ist, daß der Fahrzeugführer ein solches Handmoment $T_H$ am Lenkrad aufbringen muß, daß ein Abfallen dieses Handmomentes $T_H$ bei Erreichen des querdynamischen Grenzbereiches für den Fahrzeugführer deutlich spürbar wird.

6. Verfahren nach einem der Ansprüche 1 bis 5,

EP 0 407 716 B1

**dadurch gekennzeichnet,**
daß bei einer ermittelten Fahrbahnglätte die unterstützende Kraft in der Servolenkung in Abhängigkeit der Fahrbahnglätte so reduziert wird, daß der Fahrzeugführer das Erreichen des querdynamischen Grenzbereiches durch ein Abfallen des Handmomentes $T_H$ erkennen kann.

7. Verfahren nach Anspruch 6,
**dadurch gekennzeichnet,**
daß die Fahrbahnglätte ermittelt wird,

- indem Signale oder deren Wirkungen eines Anti-Blockiersystems (ABS) und/oder einer Antriebsschlupfregelung (ASR) ausgewertet werden und/oder

- indem eine Kraft im Lenkgestänge oder eine dieser proportionalen Größe mit einem Referenzwert unter optimalen Haftreibungsbedingungen zwischen dem Rad und der Fahrbahnoberfläche verglichen wird.

8. Verfahren nach Anspruch 6 oder 7,
**dadurch gekennzeichnet,**
daß zunächst die Abhängigkeit des Erreichens des querdynamischen Grenzbereiches von dem verwendeten Meßsignal (27.2) ermittelt wird und daß aus diesem Meßsignal (27.2) ein Maß für die Reduzierung der unterstützenden Kraft in der Servolenkung abgeleitet wird.

9. Verfahren nach einem der Ansprüche 1 bis 8,
**dadurch gekennzeichnet,**
daß die unterstützende Kraft in der Servolenkung in Abhängigkeit der Schwerpunkthöhe (Signal 26.2) so verringert wird, daß das Abfallen des Handmomentes $T_H$ bei Erreichen des querdynamischen Grenzbereiches für den Fahrzeugführer deutlich spürbar wird.

10. Verfahren nach einem der Ansprüche 1 bis 9,
**dadurch gekennzeichnet,**
daß die unterstützende Kraft in der Servolenkung im Rangierbereich deutlich höher liegt als im Fahrbetrieb.

11. Verfahren nach Anspruch 10,
**dadurch gekennzeichnet,**
daß der Rangierbereich durch eine niedrige Fahrzeuggeschwindigkeit $v_F$ und eine niedrige Querbeschleunigung $a_y$ erkannt wird.

12. Verfahren nach einem der Ansprüche 1 bis 11,
**dadurch gekennzeichnet,**
daß für den Fahrzeugführer ein bzgl. der Beladung des Fahrzeuges neutrales Lenkverhalten spürbar wird, indem mit zunehmender Beladung die unterstützende Kraft in der Servolenkung erhöht wird.

13. Verfahren nach Anspruch 12,
**dadurch gekennzeichnet,**
daß die das Lenkverhalten des Fahrzeuges beeinflussende Beladung des Fahrzeuges durch eine Sensierung der Gewichtskraft auf die gelenkte Achse (Signal 25.2) ermittelt wird.

14. Verfahren nach Anspruch 12 oder 13,
**dadurch gekennzeichnet,**
daß die unterstützende Kraft in der Servolenkung mit zunehmender, das Lenkverhalten des Fahrzeuges beeinflussender Beladung durch eine Interpolation mit einer monoton steigenden Funktion erhöht wird.

15. Verfahren nach Anspruch 14,
**dadurch gekennzeichnet,**
daß die monoton steigende Funktion eine Gerade ist.

16. Verfahren nach einem der Ansprüche 1 bis 15,
**dadurch gekennzeichnet,**
daß eine Situation mit einem Bedarf an einer größeren unterstützenden Kraft in der Servolenkung aus einer großen Lenkradwinkelgeschwindigkeit (abzuleiten aus Signal 20.2) abgeleitet wird.

17. Verfahren nach einem der Ansprüche 1 bis 16,
**dadurch gekennzeichnet,**
daß eine Funktionsüberprüfung der Servolenkung durchgeführt wird, indem das vom Fahrzeugführer aufzubringende Handmoment $T_H$ (Signal 21.2) verglichen wird mit dem Sollwert des, Handmomentes, der sich aufgrund der angesteuerten unterstützenden Kraft in der Servolenkung einstellen sollte.

**Claims**

1. Method of setting an assisting force in a power-assisted steering as a function of a plurality of driving-

7

condition parameters, in which method:

— a desired value for a manual torque to be applied to the steering wheel by the vehicle driver is derived from the driving-condition parameters,

— this desired value is controlled by the assisting force in the power-assisted steering being set in such a way that, in consideration of a balance, the manual torque and the assisting force, on the basis of the driving conditions, are precisely compensated with the forces occurring in the steering, and

— one of the driving-condition parameters is the transverse acceleration,

— a further driving-condition parameter is the vehicle speed $V_F$, and both an increasing transverse acceleration $a_y$ and an increasing vehicle speed $v_F$ leads to an at least approximately continuous reduction in the assisting force in the power-assisted steering

**characterized in that,**

at a transverse acceleration $a_{y2,}$ a greater reduction in the assisting force in the power-assisted steering with increasing vehicle speed $v_F$ is effected than at a transverse acceleration $a_{y1} < a_{y2}$.

2. Method according to Claim 1,

**characterized in that**

at a vehicle speed $v_{F2}$, a greater reduction in the assisting force in the power-assisted steering with increasing transverse acceleration $a_y$ is effected than at a vehicle speed $v_{F1} < v_{F2}$.

3. Method according to one of Claims 1 or 2,

**characterized in that**

the reduction in the assisting force in the power-assisted steering relative to a change in the vehicle speed $v_F$ in the region of low vehicle speeds $v_F$ assumes a greater amount than at higher vehicle speeds $v_F$.

4. Method according to one of Claims 1 to 3,

**characterized in that**

the reduction in the assisting force in the power-assisted steering relative to a change in the transverse acceleration $a_y$ in the region of low transverse accelerations $a_y$ assumes a greater amount than at higher transverse accelerations $a_y$.

5. Method according to one of Claims 1 to 4,

**characterized in that**

the assisting force in the power-assisted steering, when the driving conditions approach the transversely dynamic limit region, is reduced in such a way that the vehicle driver has to apply such a manual torque $T_H$ to the steering wheel that a drop in this manual torque $T_H$, when the transversely dynamic limit region is reached, can clearly be felt by the vehicle driver.

6. Method according to one of Claims 1 to 5,

**characterized in that,**

when roadway slipperiness is determined, the assisting force in the power-assisted steering is reduced as a function of the roadway slipperiness in such a way that the vehicle driver can recognize the point at which the transversely dynamic limit region is reached by a drop in the manual torque $T_H$.

7. Method according to Claim 6,

**characterized in that**

the roadway slipperiness is determined

— by signals, or their actions, from an antilock braking system (ABS) and/or from a drive-slip control (DSC) being analysed and/or

— by a force in the steering linkage or a variable proportional to this force being compared with a reference value under optimum static-friction conditions between the wheel and the roadway surface.

8. Method according to Claim 6 or 7,

**characterized in that**

first of all the dependence of the point at which the transversely dynamic limit region is reached on the measuring signal (27.2) used is determined, and in that a quantity for the reduction of the assisting force in the power-assisted steering is derived from this measuring signal (27.2).

9. Method according to one of Claims 1 to 8,

**characterized in that**

the assisting force in the power-assisted steering is reduced as a function of the height (signal 26.2) of the centre of gravity in such a way that the drop in the manual torque $T_H$, when the transversely dynamic limit region is reached, can clearly be felt by the vehicle driver.

10. Method according to one of Claims 1 to 9,

**characterized in that**

the assisting force in the power-assisted steering is clearly higher in the manoeuvring region than during driving operation.

EP 0 407 716 B1

11. Method according to Claim 10,
**characterized in that**
the manoeuvring region is recognized by a low vehicle speed $v_F$ and a low transverse acceleration $a_y$.

12. Method according to one of Claims 1 to 11,
**characterized in that**
a steering behaviour which is neutral with regard to the loading of the vehicle can be felt by the vehicle driver by the assisting force in the power-assisted steering being increased as loading increases.

13. Method according to Claim 12,
**characterized in that**
the vehicle loading influencing the steering behaviour of the vehicle is determined by sensing the weight on the steered axle (signal 25.2).

14. Method according to Claim 12 or 13,
**characterized in that**
the assisting force in the power-assisted steering, as loading influencing the steering behaviour of the vehicle increases, is increased by an interpolation having a monotonically increasing function.

15. Method according to Claim 14,
**characterized in that**
the monotonically increasing function is a straight line.

16. Method according to one of Claims 1 to 15,
**characterized in that**
a situation having a need for a greater assisting force in the power-assisted steering is derived from a high angular velocity of the steering wheel (to be derived from signal 20.2).

17. Method according to one of Claims 1 to 16,
**characterized in that**
a functional check on the power-assisted steering is carried out by the manual torque $T_H$ (signal 21.2) to be applied by the vehicle driver being compared with the desired value of the manual torque which should be set on the basis of the controlled assisting force in the power-assisted steering.

**Revendications**

1. Procédé de réglage de la force d'assistance d'une servodirection en fonction de plusieurs paramètres caractérisant les conditions de conduite, procédé dans lequel :
– une valeur de consigne d'un couple manuel à exercer sur le volant par le conducteur du véhicule est dérivée des paramètres caractérisant la condition de conduite,
– cette valeur de consigne est établie en réglant la force d'assistance exercée dans la servodirection de telle sorte que, lors de la considération d'un équilibre, le couple manuel et la force d'assistance se compensent, sur la base des conditions de conduite, précisément sous l'effet des forces s'exerçant dans la direction,
– un des paramètres caractérisant les conditions de conduite est l'accélération transversale $a_y$,
– un autre paramètre caractérisant les conditions de conduite est la vitesse $v_F$ du véhicule et
– aussi bien une augmentation de l'accélération transversale $a_y$ qu'également une augmentation de la vitesse $v_F$ du véhicule conduisent à une réduction au moins approximativement continue de la force d'assistance s'exerçant dans la servodirection, procédé
**caractérisé en ce que,**
pour une accélération transversale $a_{y2}$, il se produit une plus grande réduction de la force d'assistance dans la servodirection lors d'une augmentation de la vitesse $v_F$ du véhicule que dans le cas d'une accélération transversale $a_{y1} < a_{y2}$.

2. Procédé selon la revendication 1,
**caractérisé en ce que,**
pour une vitesse de véhicule $v_{F2}$, il se produit une plus grande diminution de la force d'assistance dans la servodirection quand l'accélération transversale $a_y$ augmente que pour une vitesse de véhicule $v_{F1} < v_{F2}$.

3. Procédé selon une des revendications 1 ou 2,
**caractérisé en ce que**
la diminution de la force d'assistance dans la servodirection, rapportée à une variation de la vitesse de véhicule $v_F$ dans le domaine des petites vitesses de véhicule $v_F$, prend une plus grande valeur que pour de grandes vitesses de véhicule $v_F$.

4. Procédé selon une des revendications 1 à 3,

9

**caractérisé en ce que**

la diminution de la force d'assistance dans la servodirection, rapportée à une variation de l'accélération transversale $a_y$ dans un domaine de petites accélérations transversales $a_y$ , prend une plus grande valeur que pour de grandes accélérations transversales $a_y$.

5. Procédé selon une des revendications 1 à 4,

**caractérisé en ce que**

la force d'assistance dans la servodirection, lorsque les conditions de marche se rapprochent du domaine limite de réaction dynamique transversale, est réduite de telle sorte que le conducteur du véhicule doive exercer manuellement sur le volant un couple $T_H$ qui soit tel qu'une baisse de ce couple manuel $T_H$, lors de l'atteinte du domaine limite de réaction dynamique transversale, puisse être nettement ressentie par le conducteur du véhicule.

6. Procédé selon une des revendications 1 à 5,

**caractérisé en ce que,**

lorsqu'une surface lisse de route est atteinte, la force d'assistance dans la servodirection est réduite en fonction de la surface lisse de la route de telle sorte que le conducteur du véhicule puisse détecter l'atteinte du domaine limite de réaction dynamique transversale par une baisse du couple manuel $T_H$.

7. Procédé selon la revendication 6,

**caractérisé en ce que**

la surface lisse de route est détectée par le fait que :

– des signaux ou leurs actions, d'un système antiblocage (ABS) et/ou d'un système de régulation de patinage à l'entraînement (ASR) sont analysés et/ou

– une force produite dans la tringlerie de direction, ou une grandeur proportionnelle à cette force, est comparée à une valeur de référence dans des conditions optimales de frottement d'adhérence entre la roue et la surface de route.

8. Procédé selon la revendication 6 ou 7,

**caractérisé en ce qu'**

initialement on détermine comment l'atteinte du domaine limite de réaction dynamique transversale dépend du signal de mesure (27 .2) utilisé et en ce qu'on déduit de ce signal de mesure (27.2) une mesure de la diminution de la force d'assistance dans la servodirection.

9. Procédé selon une des revendications 1 à 8,

**caractérisé en ce que**

la force d'assistance dans la servodirection est réduite en fonction de la hauteur du centre de gravité (signal 26.2) de telle sorte que la baisse du couple manuel $T_H$ lors de l'atteinte du domaine limite de réaction dynamique transversale soit nettement ressentie par le conducteur du véhicule.

10. Procédé selon une des revendications 1 à 9,

**caractérisé en ce que**

la force d'assistance dans la servodirection est nettement plus grande dans le domaine de conduite pour rangement que dans le domaine de conduite en marche.

11. Procédé selon la revendication 10,

**caractérisé en ce que**

le domaine de conduite pour rangement est détecté par une petite vitesse de véhicule $V_F$ et une petite accélération transversale $a_y$.

12. Procédé selon une des revendications 1 à 11,

**caractérisé en ce que,**

pour le conducteur du véhicule, un comportement neutre de direction en rapport avec la charge du véhicule peut être ressenti par le fait que la force d'assistance dans la servodirection est augmentée quand la charge croît.

13. Procédé selon la revendication 12,

**caractérisé en ce que**

la charge du véhicule, influençant le comportement de direction du véhicule, est déterminée par un captage de la force pondérale s'exerçant sur l'essieu dirigé (signal 25.2).

14. Procédé selon la revendication 12 ou 13,

**caractérisé en ce que**

la force d'assistance dans la servodirection est augmentée, lors d'une augmentation de la charge influençant le comportement de direction du véhicule, par une interpolation avec une fonction à croissance monotone.

15. Procédé selon la revendication 14,

**caractérisé en ce que**

la fonction à croissance monotone est une droite.

16. Procédé selon une des revendications 1 à 15,
**caractérisé en ce qu'**
une situation avec obligation d'augmenter la force d'assistance dans la servodirection est dérivée d'une plus grande vitesse angulaire du volant ( à déduire du signal 20.2).

17. Procédé selon une des revendications 1 à 16,
**caractérisé en ce qu'**
une vérification de fonctionnement de la servodirection est effectuée au moyen d'une comparaison du couple manuel $T_H$ ( signal 21.2) à exercer par le conducteur du véhicule avec la valeur de consigne du couple manuel, qui devrait être réglée sur la base de la force d'assistance à exercer dans la servodirection.

*Fig. 1*

Handmoment $T_H$

Querbebeschleunigung $a_y$

Fahrgeschwindigkeit $V_F$

*Fig. 2*

20.1

2

22.1.1

221.2.

25.2

25.1

4

24.1

2.1.1

22.2.1

23.1

26.1

22.2.2

232

24.2

26.2

27.2

20.2

21.2

1

11

Fig.3

| $V_F$ | |
|---|---|
| km/h | Klasse |
| 0 | – 0 |
| 2 | – 1 |
| 4 | – 1 |
| . | |
| . | |
| 110 | – 22 |
| 128 | – 23 |
| $V_{Fmax.}$ | 23 |

$F_{VA}$

| $a_y$ | |
|---|---|
| m/s² | Klasse |
| –8 | 7 |
| –6,5 | 7 |
| . | |
| . | |
| –0,5 | 2 |
| –0,25 | 1 |
| 0 | 0 |
| +0,25 | 1 |
| +0,5 | 2 |
| . | |
| . | |
| +6,5 | 7 |
| +8 | 7 |

leer $V_F$ $a_y$

Interpolation

beladen $V_F$ $a_y$

27.2

20.2

26.2

11